(19) Europäisches Patentamt
European Patent Office
Office européen des brevets

(11) Veröffentlichungsnummer: **0 413 233 A2**

(12) **EUROPÄISCHE PATENTANMELDUNG**

(21) Anmeldenummer: **90115121.7**

(51) Int. Cl.5: **C08G 69/26**, C08G 69/00

(22) Anmeldetag: **07.08.90**

(30) Priorität: **18.08.89 DE 3927321**

(43) Veröffentlichungstag der Anmeldung: **20.02.91 Patentblatt 91/08**

(84) Benannte Vertragsstaaten: **DE FR GB IT**

(71) Anmelder: **BAYER AG**
**D-5090 Leverkusen 1 Bayerwerk(DE)**

(72) Erfinder: **Nielinger, Werner, Dr.**
**Bärenstrasse 21**
**D-4150 Krefeld(DE)**
Erfinder: **Mayska, Paul Johannes, Dr.**
**Bodelschwinghstrasse 18**
**D-4150 Krefeld(DE)**
Erfinder: **Freitag, Dieter, Dr.**
**Hasenheide 10**
**D-4150 Krefeld(DE)**
Erfinder: **Idel, Karsten-Josef, Dr.**
**Am Schwarzkamp 38**
**D-4150 Krefeld(DE)**
Erfinder: **Fengler, Gerd, Dr.**
**Bethelstrasse 16**
**D-4150 Krefeld(DE)**

(54) **Copolyamide mit erhöhter Glasübergangstemperatur.**

(57) Gegenstand der Erfindung sind Copolyamide mit erhöhter Glasübergangstemperatur, die 3-30 Gew.-% an Polyamideinheiten auf Basis von Dicarbonsäuren und/oder Diaminen bestimmter cycloaliphatischer Bisphenole der Formel I enthalten

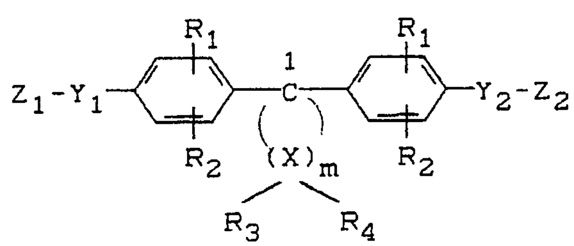

(I)

(Substituenten siehe Beschreibung)

# COPOLYAMIDE MIT ERHÖHTER GLASÜBERGANGSTEMPERATUR

Gegenstand der Erfindung sind Copolyamide mit erhöhter Glasübergangstemperatur, die 3-30 Gew.-% an Polyamideinheiten auf Basis von Dicarbonsäuren und/oder Diaminen bestimmter cycloaliphatischer Bisphenole der Formel I enthalten

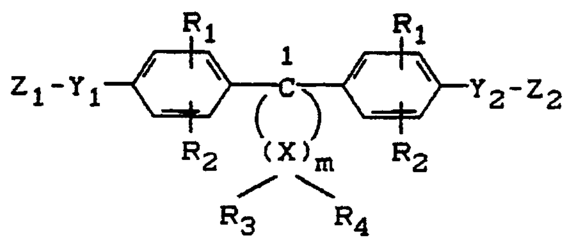

(I)

(Substituenten wie im folgenden beschrieben.)

Polyamide haben aufgrund der Kombination hervorragender Eigenschaften große Bedeutung für technische Anwendungen erlangt. So werden die teilkristallinen Polyamide wegen ihrer hohen Zähigkeit, Steifigkeit, Abriebfestigkeit und Härte zur Herstellung von Formteilen benutzt, die im Automobilbereich, als Abdeckungen und Gehäuseteile für technische Geräte, ferner im Elektrosektor Verwendung finden. Zur Erhöhung der Steifigkeit werden die Polyamide häufig mit Glasfasern oder mineralischen Füllstoffen versetzt.

Im Bereich der Glasübergangstemperatur nimmt der Elastizitätsmodul der teilkristallinen Polyamide deutlich ab. Es ist aber für viele Anwendungen wünschenswert, wenn dieser Abfall insbesondere bei glasfaserverstärkten Polyamiden zu höheren Temperaturen hin verschoben wird, damit die hohe Steifigkeit auch über den Bereich der Glasübergangstemperatur von 20-60° C hinaus erhalten bleibt.

Im Gegensatz zu den teilkristallinen Polyamiden ist im Bereich der Glasübergangstemperatur und darüber bei amorphen Polyamiden keine Formbeständigkeit und Steifigkeit mehr vorhanden, die Polyamide sind in diesem Temperaturbereich in der Praxis nicht verwendbar. Um die amorphen Polyamide auch bei höheren Temperaturen einsetzen zu können, ist man daher ebenfalls daran interessiert, ihre Glasübergangstemperatur anzuheben.

Es wurde nun überraschenderweise gefunden, daß man die Glasübergangstemperatur von Polyamiden erhöhen kann, indem man Copolyamide aus den an sich bekannten Polyamiden unter Mitverwendung von Dicarbonsäuren von cycloaliphatischen Bisphenolen und einem Diamin herstellt.

Gegenstand der Erfindung sind also teilkristalline oder amorphe Copolyamide, die bestimmte Mengen an Dicarbonsäuren oder Diaminen von cycloaliphatischen Bisphenolen der Formel (I) enthalten und die gegenüber den Basispolyamiden um eine wenigstens 5° C erhöhte Glasübergangstemperatur aufweisen.

Gegenstand der Erfindung sind somit teilkristalline oder amorphe, gegebenenfalls übliche Zusatzstoffe enthaltende Copolyamide mit erhöhter Glastemperatur, dadurch gekennzeichnet, daß sie im Copolyamid

1. 3-30 Gew.-%, vorzugsweise 5-20 Gew.-%, Polyamideinheiten aus

1a) einer Dicarbonsäure bzw. einem Diamin der Formel

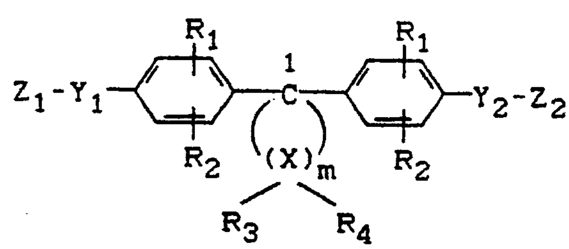

(I)

worin

$Y_1$ und $Y_2$ unabhängig voneinander für Sauerstoff- oder Schwefelstoffatome, bevorzugt jedoch Sauerstoffatome,

$Z_1$ und $Z_2$ unabhängig voneinander für o-, m- oder p-Carboxyphenyl, aliphatische Carbonsäurereste bzw.

o-, m- oder p-Benzylamin, vorzugsweise jedoch für 4-Carboxyphenyl,
$R_1$ und $R_2$ unabhängig voneinander für Wasserstoff, Halogen (bevorzugt Chlor oder Brom), $C_1$-$C_8$-Alkyl, $C_5$-$C_6$-Cycloalkyl, $C_6$-$C_{10}$-Aryl und $C_7$-$C_{12}$-Aralkyl, bevorzugt Phenyl-$C_1$-$C_4$-alkyl, insbesondere Benzyl, besonders bevorzugt ist $R_1$ und $R_2$ Wasserstoff,
m für eine ganze Zahl von 4 bis 7, bevorzugt 4 oder 5,
$R_3$ und $R_4$ für jedes X individuell wählbar, unabhängig voneinander Wasserstoff ein $C_1$-$C_{12}$-Alkyl oder $C_1$-$C_{12}$-Isoalkyl, vorzugsweise H oder Methyl
und
X für Kohlenstoff steht,
vorzugsweise mit der Maßgabe, daß an mindestens einem Atom X, $R_3$ und $R_4$ gleichzeitig Alkyl sind,
und
1b) einem Diamin bzw. einer Dicarbonsäure,
enthalten und
2) die restlichen Polyamideinheiten des Basispolyamids aus üblichen Polyamiden auf Basis Lactamen, Aminocarbonsäuren, und/oder Diaminen/Dicarbonsäuren bestehen und das Copolyamid eine gegenüber dem Basispolyamid um wenigstens 5 °C erhöhte Glasübergangstemperatur aufweist.

Geeignete Dicarbonsäuren werden z.B. aus den entsprechenden Bisphenolen durch Umsetzung mit Halogen- oder Nitroderivaten der Benzoesäure erhalten.

Es kommen insbesondere Verbindungen der Formel (I) in Betracht,

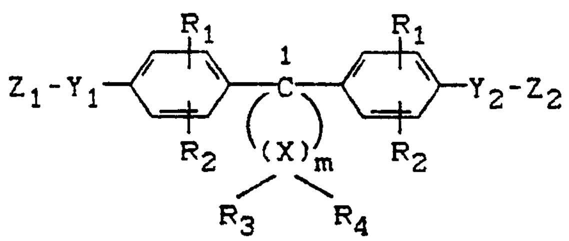

(I)

worin
$Y_1$ und $Y_2$ unabhängig voneinander für Sauerstoff- oder Schwefelstoffatome, bevorzugt jedoch Sauerstoffatome,
$Z_1$ und $Z_2$ unabhängig voneinander für o-, m- oder p-Carboxyphenyl, aliphatische Carbonsäurereste bzw. o-, m- oder p-Benzylamin, vorzugsweise jedoch für 4-Carboxyphenyl,
$R_1$ und $R_2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl, bevorzugt Phenyl-$C_1$-$C_4$-Alkyl, insbesondere Benzyl, besonders bevorzugt ist $R_1$ und $R_2$ Wasserstoff,
m eine ganze Zahl von 4 bis 7, bevorzugt 4 oder 5,
$R_3$ und $R_4$ für jedes X individuell wählbar, unabhängig voneinander Wasserstoff ein $C_1$-$C_{12}$-Alkyl oder $C_1$-$C_{12}$-Isoalkyl, vorzugsweise H oder Methyl
und
X Kohlenstoff steht.

Vorzugsweise gilt dabei die Maßgabe, daß an mindestens einem Atom X, die Reste $R_3$ und $R_4$ gleichzeitig Alkyl sind und insbesondere die Reste in 3,3-Stellung am Cyclohexanrest stehen.

Bevorzugt sind Verbindungen der Formel I mit 5 und 6 C-Atomen im Ring des cycloaliphatischen Rests (m = 4 oder 5 in Formel (I)), beispielsweise der Formeln

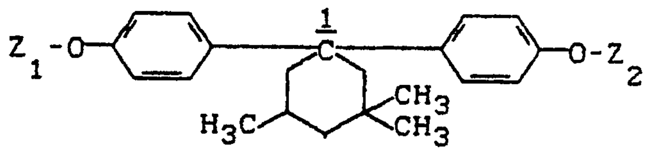
(Ia)

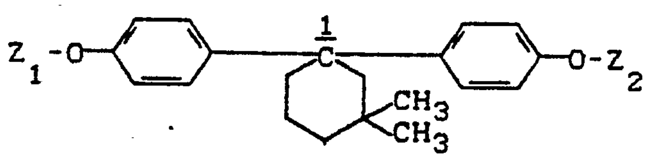
und
(Ib)

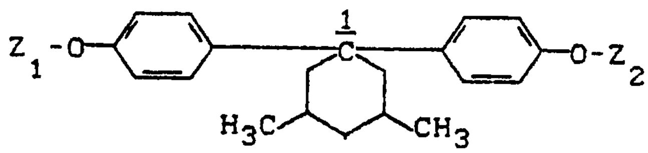
(Ic)

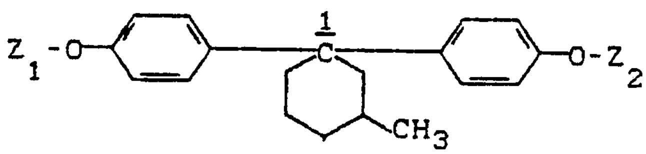
(Id)

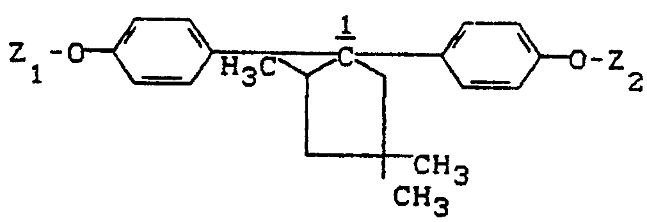
(Ie)

wobei die 3.3.5-Trimethylcyclohexan-Derivate (Formel Ia) besonders bevorzugt sind.

Die Ausgangsmaterialien Dihydroxydiphenylcycloalkane der Formel (II)

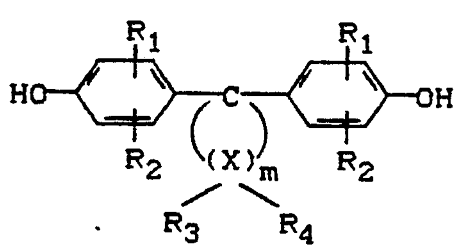
(II)

können durch Kondensation von Phenolen der Formel (III)

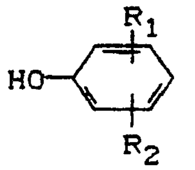

(III)

und Ketonen der Formel (IV)

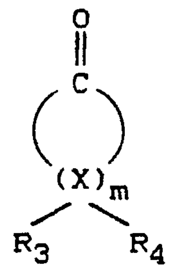

(IV)

hergestellt werden, wobei in den Formeln X, $R_1$, $R_2$, $R_3$, $R^4$ und m die für Formel (I) angegebene Bedeutung haben.

Die Herstellung von Bisphenolen der Formel (II) ist den unveröffentlichten deutschen Patentanmeldungen P 38 32 396 und P 38 33 953.6 zu entnehmen.

Die Phenole der Formel (III) sind teilweise literaturbekannt oder nach literaturbekannten Verfahren erhält lich (siehe beispielsweise für Kresole und -Xylenole, Ullmanns Encyklopädie der technischen Chemie 4. neubearbeitete und erweiterte Auflage, Band 15, Seiten 61 -77, Verlag Chemie-Weinheim-New York 1978; für Chlorphenole, Ullmanns Encyklopädie der technischen Chemie, 4. Auflage, Verlag Chemie, 1975, Band 9, Seiten 573-582; und für Alkylphenole, Ullmanns Encyklopädie der technischen Chemie, 4. Auflage, Verlag Chemie 1979, Band 18, Seiten 191-214).

Beispiele für geeignete Phenole der Formel III sind: Phenol, o-Kresol, m-Kresol, 2,6-Dimethylphenol, 2-Chlorphenol, 3-Chlorphenol, 2,6-Dichlorphenol, 2-Cyclohexylphenol, Phenylphenole und o-Benzylphenol.

Die Ketone der Formel (IV) sind literaturbekannt (siehe beispielsweise Beilsteins Handbuch der Organischen Chemie, 7. Band, 4. Auflage, Springer-Verlag, Berlin, 1925 und die entsprechenden Ergänzungsbände 1 bis 4; J. Am. Chem. Soc. Vol 79 (1957), Seiten 1488-1492; US-PS 2 692 289; Allen et al., J. Chem. Soc., (1959), 2186-2192 und J. Org. Chem. Vol. 38, (1973), Seiten 4431-4435; sowie J. Am. Chem. Soc. 87 , (1965), Seite 1353-1364. Ein allgemeines Verfahren zur Herstellung von Ketonen der Formel ist beispielsweise in "Organikum, 15. Auflage, 1977, VEB-Deutscher Verlag der Wissenschaften, Berlin, beispielsweise Seite 698. beschrieben.

Beispiele für (bekannte) Ketone der Formel (V) sind:
3,3-Dimethylcyclopentanon, 3,3-Dimethylcyclohexanon, 4,4-Dimethylcyclohexanon, 3-Ethyl-3-Methylcyclopentanon, 2,3,3-Trimethylcyclopentanon, 3,3,4-Trimethylcyclopenta non, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 3,3,5-Trimethylcyclohexanon, 3,4,4-Trimethylcyclohexanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 2,2-Dimethylcyclooctanon, und 3,3,8-Trimethylcyclooctanon.

Beispiele für bevorzugte Ketone sind

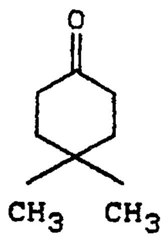
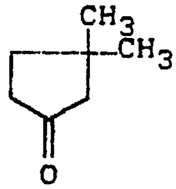

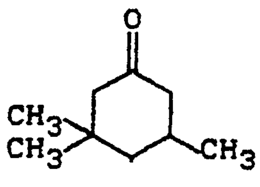
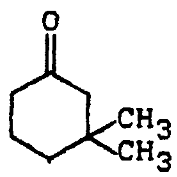
und
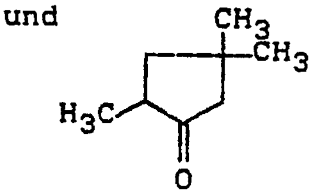

Zur Bisphenolherstellung werden im allgemeinen 2 bis 10 Mol, vorzugsweise 2,5 bis 6 Mol Phenol (III) pro Mol Keton (IV), verwendet. Bevorzugte Reaktionszeiten betragen 1 bis 100 Stunden. Im allgemeinen arbeitet man bei Temperaturen von -30° C bis 300° C, vorzugsweise von -15° C bis 150° C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden, bevorzugt in Mengen von 0,01 - 0,4 Mol/Mol Keton, insbesondere bevorzugt 0,05 - 0,2 Mol/Mol Keton beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Man kann Phenol und Keton im Molverhältnis zwischen 2:1 und 10:1, vorzugsweise zwischen 2,5 : 1 und 6 : 1 bei Temperaturen zwischen -30° C und 300° C, vorzugsweise zwischen -15° C und 150° C und bei Drücken von 1 bis 20 bar, vorzugsweise von 1 bis 10 bar in Anwesenheit saurer Katalysatoren und gegebenenfalls in Anwesenheit von Co-Katalysatoen und/oder Lösungsmitteln und/oder wasserentziehenden Mitteln umsetzen.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; ebenfalls verwendbar sind Ethyl oder $C_3$-$C_6$-Alkylreste, die geradkettig oder verzweigt sein können. Die X-Atome in α-Stellung zu dem di-phenylsubstituierten C-Atom (C-1) sind bevorzugt nicht dialkylsubstituiert, dagegen ist die Disubstitution mit Alkyl in β-Stellung in C-1 bevorzugt (3,3-Stellung). Eine weitere bevorzugte Substitution durch Alkyl ist in 5-Stellung.

Die Herstellung von Verbindungen der Formel I ist Gegenstand der unveröffentlichen Patentanmeldung P 3 834 661.3 (Le A 26 341). Sie erfolgt beispielsweise durch Umsetzung von Dihydroxydiphenylcycloalkanen (II) (Bedeutung der Substituenten wie bei Formel (I)) in Form der Kaliumsalze mit p-Chlorbenzonitril und anschließende Verseifung der Nitril- zu Carboxylgruppen. Diamine lassen sich durch Reduktion der Nitril- zu Aminogruppen erhalten. Weitere Herstellungsbeispiele zu (II) sind im Beispielteil dieser Anmeldung angegeben.

Als Diamine, die zusammen mit den erfindungsgemäß zu verwendenden Dicarbonsäuren eingesetzt werden, sind grundsätzlich alle zur Herstellung von Polyamiden in Betracht kommenden Diamine geeignet. Bevorzugte Beispiele sind Hexamethylendiamin, 2,2,4- und 2,4,4-Trimethylhexamethylendiamin, Isophorondiamin, m- und p-Xylylendiamin und die isomeren Bis-(4-aminocyclohexyl)-methane.

Als Dicarbonsäuren, die zusammen mit den erfindungsgemäß zu verwendenden Diaminen I eingesetzt werden, kommen die üblichen, für die Basis Polyamide aufgeführten Dicarbonsäuren in Betracht.

Der Anteil an den erfindungsgemäßen Copolyamideinheiten sollte 3-30 Gew.-%, vorzugsweise 5-20 Gew.-%, bezogen auf das Copolyamid, betragen. Er sollte jedoch wenigstens so hoch sein, daß die Glasübergangstemperatur gegenüber dem Basispolyamid um wenigstens 5 °C erhöht ist.

Als Basispolyamide kommen grundsätzlich alle Polyamide in Betracht. Von besonderer Bedeutung sind beispielsweise die teilkristallinen Polyamide 6, 46, 66, 610, 11, 12 sowie Copolyamide von Polyamid 6 oder 66 insbesondere mit Terephthalsäure und/oder Isophthalsäure und/oder Hexahydroterephthalsäure und Hexamethylendiamin, ferner die amorphen Polyamide aus Terephthalsäure und den isomeren Trimethylhexamethylendiaminen, Isophthalsäure und Hexamethylendiamin, Isophthalsäure, 3,3′-Dimethyl-4,4′-diaminodicyclohexylmethan und Laurinlactam, ferner aus Isophthalsäure, Terephthalsäure, Hexamethylendiamin und Bis-(4-aminocyclohexyl)-methan.

Die Herstellung der erfindungsgemäßen Copolyamide erfolgt nach den aus dem Stand der Technik bekannten, kontinuierlichen oder diskontinuierlichen Verfahren, indem man die Monomeren direkt oder als Salz, gegebenenfalls unter Zusatz von Wasser, bei 200 - 300 °C bis zum Erreichen des gewünschten Molekulargewichts polykondensiert. Man kann auch ein niedermolekulares Vorkondensat in der Festphase nachkondensieren.

Die erfindungsgemäßen Copolyamide können die üblichen Zusätze, z.B. Hilfsmittel wie Gleit- und Entformungsmittel, Stabilisatoren, Flammschutzmittel, farbgebende Mittel, ferner Füllstoffe, insbesondere als Verstärkungsstoffe, Glasfasern in Mengen von 10-60 Gew.-%, bezogen auf die gesamte Mischung enthalten. Als weitere Füll- und Verstärkungsstoffe kommen Mikroglaskugeln, Kreide, Quarze wie beispielsweise Novaculit und Silikate wie Feldspat, Glimmer, Talkum, Wolastonit sowie Kaolin in kalzinierter und nicht kalzinierter Form, vorzugs weise in silanierter Form, in Betracht. Außerdem sind Farbstoffe und Pigmente, insbesondere Farbruße und/oder Nigrosinbasen zu nennen, ferner Schlagzähmodifikatoren-Zusätze beispielsweise auf der Basis von Copolymerisaten des Ethylens, Poly(meth)acrylaten, gepfropften Polybutadienen und SAN-Harzen.

Die erfindungsgemäßen Copolyamide zeichnen sich durch eine erhöhte Glasübergangstemperatur aus, so daß sie gegenüber den Basispolyamiden ihre Steifigkeit bei erhöhter Temperatur behalten. Sie können daher Herstellung von Formkörpern, insbesondere für den Kraftfahrzeugsektor und für technische Geräte, dienen.

## Beispiele

### Beispiel 1

Man kondensiert 108,90 g Salz aus Isophthalsäure und Hexamethylendiamin, 4,36 g 1,1-Bis-[4-(carboxyphenoxy)-phenyl]-3,3,5-trimethylcyclohexan und 1,82 g Hexamethylendiamin (in dieser Menge ist ein Überschuß von 2 % enthalten, um Verluste durch Verdampfen zu kompensieren) unter Rühren in einer Stickstoffatmosphäre zunächst 1 Stunde bei 220 °C, dann 2 Stunden bei 270 °C. Man erhält eine klare, fast farblose Schmelze. Das Copolyamid ist nach dem Erstarren transparent. Die relative Viskosität, gemessen an einer einprozentigen Lösung in m-Kresol bei 25 °C in einem Ubbelohde-Viskosimeter, beträgt 2,6. Das Copolyamid hat eine Glasübergangstemperatur, bestimmt durch DSC, von 133 °C.

### Beispiel 2

Wie in Beispiel 1 kondensiert man 91,70 g Salz aus Isophthalsäure und Hexamethylendiamin, 17,45 g 1,1-Bis[4-(carboxyphenoxy)-phenyl]-3,3,5-trimethylcyclohexan und 4,44 g Hexamethylendiamin (enthält 2 % Überschuß). Das Copolyamid ist nach dem Erstarren transparent. Die relative Viskosität beträgt 3,17. Die Glasübergangstemperatur ist 141 °C.

### Vergleichsbeispiel 1

Wie in Beispiel 1 beschrieben, stellt man ein Polyamid nur aus Isophthalsäure und Hexamethylendiamin her. Das Produkt ist transparent, es hat eine relative Viskosität von 2,7 und eine Glasübergangstemperatur

von 128 °C.

Beispiel 3

Man erhitzt 71 g ε-Caprolactam, 10,43 ε-Aminocapronsäure, 17,27 g 1,1-Bis-[carboxyphenoxy)-phenyl]-cyclohexan und 4,03 g Hexamethylendiamin (in dieser Menge ist ein Überschuß von 2 % enthalten) eine Stunde bei 200 °C und 7 Stunden bei 270 °C unter Rühren in einer Stickstoffatmosphäre. Das Polyamid ist nach dem Erstarren trübe, es hat eine relative Viskosität von 3,0 und eine Glasübergangstemperatur von 62 °C.

Beispiel 4

Die Polykondensation von 71 g ε-Caprolactam, 10,43 g ε-Aminocapronsäure, 17,45 g 1,1-Bis-[4-(carboxyphenoxy)-phenyl]-3,3,5-trimethylcyclohexan und 3,76 g Hexamethylendiamin wie in Beispiel 3 beschrieben, ergibt ein Polyamid mit einer relativen Viskosität von 3,1 und einer Glasübergangstemperatur von 66 °C.

Vergleichsbeispiel 2

Die Herstellung von Polyamid 6 analog Beispiel 3, jedoch ohne den erfindungsgemäßen Zusatz von 1,1-Bis[(4-carboxyphenoxy)-phenyl]-3,5,5-trimethylcyclohexan und Hexamethylendiamin, führt zu einem trüben Polyamid mit einer relativen Viskosität von 3,4 und einer Glasübergangstemperatur von 45 °C.

Beispiel 5

Herstellung der Dicarbonsäure von Beispielen 1-3

15,5 g des Bisphenols 5a der Formel 1,1-Bis(4-hydroxyphenyl)-3,3,5-trimethyl-cyclohexan

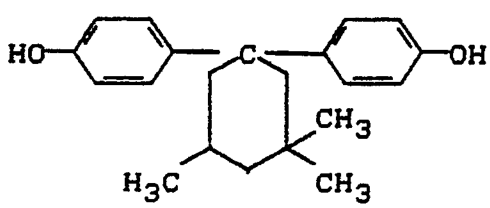

(0,05 M), 8,9 g 45 %ige Natronlauge (0,1 M), 100 ml Dimethylsulfoxid und 60 ml Toluol werden in einer Rührapparatur mit Wasserabscheider unter $N_2$ zum Rückfluß erhitzt, bis kein Wasser mehr abgeschieden wird. Danach wird statt Wasserabscheider eine Soxhlet-Apparatur aufgesetzt, die mit Molekularsieb 4 Å beschickt ist. Die Mischung wird 1 h unter $N_2$ zum Rückfluß erhitzt und anschließend die Soxhlet-Apparatur durch einen absteigenden Kühler ersetzt. Es wird so lange destilliert (in der Hauptsache Toluol), bis eine Innentemperatur von 145 °C erreicht ist. Danach werden 23,4 g p-Nitrobenzoesäureethylester zugegeben und das Reaktionsgemisch unter $N_2$ 12 h bei 120 °C umgesetzt. Nach Abkühlung wurde in viel $H_2O$ eingegossen und mehrfach mit Methylenchlorid ausgeschüttelt. Die Methylenchlorid-Phasen wurden eindestilliert. Der Rückstand (11 g) wurde durch NMR-Spektroskopie als in der Hauptsache als Bisester

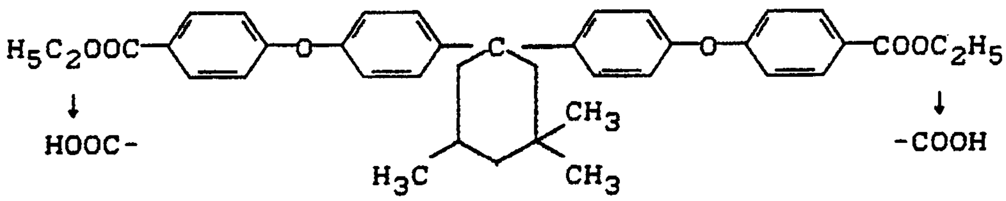

identifiziert.

Der Ester wurde alkalisch verseift und die Dicarbonsäure isoliert und aus Essigsäure umkristallisiert (Fp 273 °C)

Beispiel 5a

Herstellung des Bisphenols (Ausgangsmaterial für Beispiel 5)

In einem 1 l-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30 °C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 Stunden bei Zimmertemperatur nachreagieren. Anschließend wird das überschüssige Phenol durch Wasserdampfdestillation entfernt. Der verbleibende Rückstand wird zweimal mit Petrolether (60-90) und einmal mit Methylenchlorid heiß extrahiert und abfiltriert.
Ausbeute: 370 g 1,1-Bis(4-hydroxyphenyl)-3,3,5-trimethylcyclohexan.
Schmelzpunkt: 205 bis 207 °C

Beispiel 6

Die Dicarbonsäure (6b) ist nach folgendem Verfahren über das Dinitril (6a) und dessen Verseifung zugänglich, das Diamin 6c aus dem Dinitril (6a) durch Reduktion:

6a) Herstellung von 1,1-Bis-[4-(-cyanophenoxy)-phenyl]-cyclohexan (Dinitril)

In einem 500-ml Dreihalskolben, ausgerüstet mit Rührer, Thermometer, Wasserabscheider und Rückflußkühler werden 40,2 g (0,15 mol) Bis-(4-hydroxyphenyl)cyclohexan (Bisphenol Z), 42,08 g (0,30 mol) 40 %ige Kalilauge, 80 g N,N′-Dimethylimidazolidin-2-on (DMI) und 100 ml Toluol chargiert und anschließend so lange am Rückfluß gehalten, bis alles Wasser aus dem System entfernt ist. Danach werden 41,25 g (0,30 mol) p-Chlorbenzonitril zugesetzt und die Reaktionsmischung auf 195 °C erhitzt. Nach 6 h Reaktionszeit wird die Reaktionsmischung am Rotationsverdampfer eingeengt und aus n-Butanol umkristallisiert.
Ausbeute: 76,2 %
Schmelzpunkt: 160 °C
Gesamtchlor: 0,014 %
anorganisches Chlor: 39 ppm

| Elementaranalyse: | C | H | N | O |
|---|---|---|---|---|
| theoretisch | 81,7 | 5,53 | 5,96 | 6,81 |
| gefunden | 81,2 | 5,82 | 5,93 | 7,06 |

Die $^{1}H$- und $^{13}C$-NMR-Spektra entsprechen der chemischen Formel

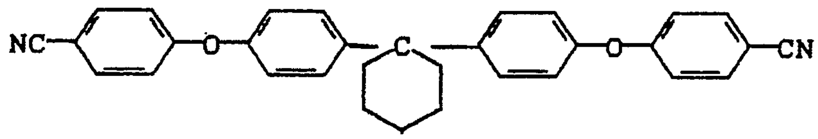

66) Herstellung von 1,1-Bis-[4-(carboxyphenoxy)-phenyl]-cyclohexan

In einem 250-ml Dreihalskolben, ausgerüstet mit Rührer, Thermometer, Gaseinleitungsrohr und Rückflußkühler werden 18,8 g (0,04 mol) 1,1-Bis[4(cyanophenoxy) phenyl]-cyclohexan (aus Beispiel 5a)), 44,8 g (0,4 mol) 50 %ige Kalilauge und 50 ml DMI eingewogen. Die Reaktionsmischung wird unter Stickstoffeinleitung 24 h am Rückfluß gehalten. Während der Reaktion spaltet Ammoniak ab, und das anfangs kaum lösliche Nitril geht nach und nach in Lösung. Zum Schluß wird die Lösung klar. Das Fortschreiten der Reaktion wird durch Prüfung der Ammoniakentwicklung und durch Messung der Säurezahl des probeweise gefällten Produktes verfolgt. Nach beendeter Reaktion wird das Produkt durch Fällung in 600 ml verdünnter Salzsäure und anschließende Filtration isoliert.
Ausbeute: quantitativ
Schmelzpunkt: 240 °C (Essigsäure)
Säurezahl (SZ): 218-220 (theoretisch 220)

| Elementaranalyse: | C | H | O |
|---|---|---|---|
| theoretisch | 75,59 | 5,51 | 18,9 |
| gefunden | 74,80 | 5,56 | 19,0 |

Die $^1H$- und $^{13}C$-NMR-Spektra entsprechen der chemischen Formel

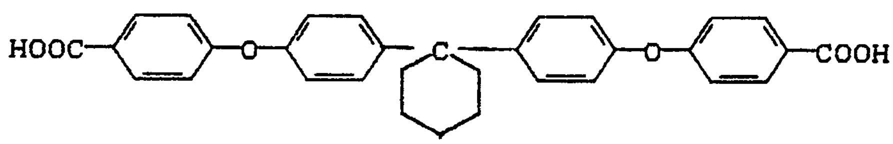

Beispiel 6 c)

Herstellung von 1,1-Bis-[4-(aminomethylphenoxy)-phenyl]-cyclohexan

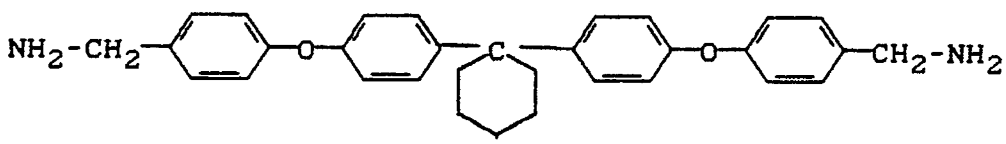

Das Diamin ist durch $LiAlH_4$-Reduktion des Dinitrils von Beispiel 6a) in Tetrahydrofuran-Lösung zugänglich.

Beispiel 7a) (Dinitril-Vorstufe)

23,29 g des 1,1-Bis-(4-hydroxyphenyl)-3,3,5-trimethylcyclohexans (vgl. Beispiel 5) Dimethylsulfoxid und 65 ml Toluol werden in einer Rührapparatur mit Wasserabscheider unter $N_2$ zum Rückfluß erhitzt, bis kein Wasser mehr abgeschieden wird. Danach wird statt Wasserabscheider eine Soxhlet-Apparatur aufgesetzt, die mit Molekularsieb 4 Å beschicht ist. Die Mischung wird 1 h unter $N_2$ zum Rückfluß erhitzt und anschließend die Soxhlet-Apparatur durch einen absteigenden Kühler ersetzt. Es wird so lange destilliert (in der Hauptsache Toluol), bis eine Innentemperatur von 145 °C erreicht ist. Danach werden 24,44 g 4-Nitrobenzonitril (0,165 M) zugegeben und das Reaktionsgemisch unter $N_2$ 7 h bei 100 °C umgesetzt. Nach Abkühlen wurden die abgeschiedenen Kristalle abgesaugt, mit $H_2O$ und anschließend mit Methanol gewaschen und getrocknet.
Ausbeute: 24,92 g (65 % d.Th.)
Schmelzpunkt; 177-178 °C

| Elementaranalyse: | C | H | N |
|---|---|---|---|
| berechnet: | 82,0 | 6,29 | 5,46 |
| gefunden: | 81,7 | 6,55 | 5,66 |

Das 1H- und das IR-Spektrum entsprechen der chemischen Formel des Dinitrils:

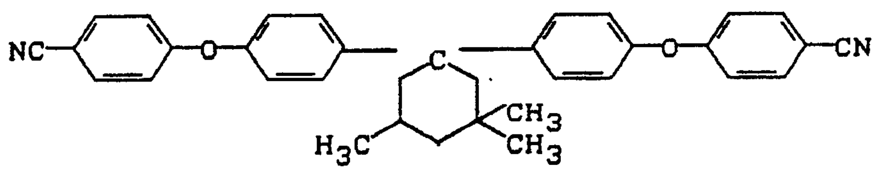

Beispiel 7b) Dicarbonsäure (vgl. Beispiel 4)

In einem 250-ml-Dreihalskolben, ausgerüstet mit Rührer, Thermometer, Gaseinleitungsrohr und Rückflußkühler werden 20,46 g (0,04 mol) 1,1-Bis[4-(cyanophenoxy)-phenyl]-3,3,5-trimethylcyclohexan (aus Beispiel 7a), 44,8 g (0,4 mol) 50%ige Kalilauge und 50 ml DMI eingewogen. Die Reaktionsmischung wird unter Stickstoffeinleitung 24 h am Rückfluß gehalten. Während der Reaktion spaltet Ammoniak ab, und das anfangs kaum lösliche Nitril geht nach und nach in Lösung. Zum Schluß wird die Lösung klar. Das Fortschreiten der Reaktion wird durch Prüfung der Ammoniakentwicklung und durch Messung der Säurezahl des probeweise gefällten Produktes verfolgt. Nach beendeter Reaktion wird das Produkt durch Fällung in 600 ml verdünnter Salzsäure und anschließende Filtration isoliert.

Die Ausbeute war quantitativ. Das Produkt zeigte folgende Eigenschaften:
Schmelzpunkt: 273 °C (Essigsäure)
Säurezahl (SZ): 203 - 205 (theoretisch 204)

| Elementaranalyse: | C | H | O |
|---|---|---|---|
| berechnet | 76,34 | 6,22 | 17,43 |
| gefunden | 76,20 | 6,33 | 17,60 |

Das $^1H$- und das $^{13}C$-IR-Spektrum bestätigen die chemische Formel der Dicarbonsäure:

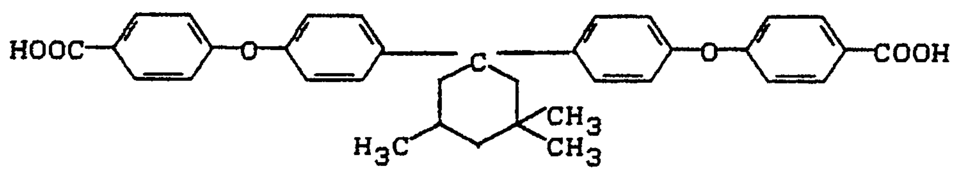

Beispiel 7c)

Das Diamin der Formel

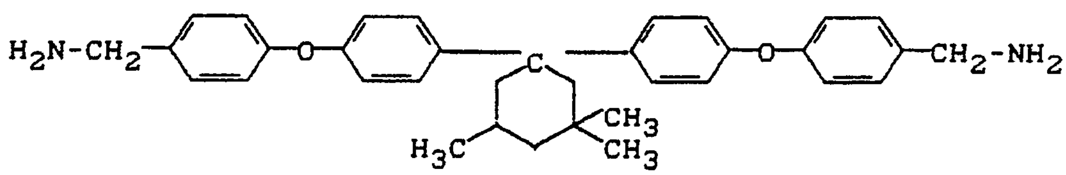

ist aus der in Beispiel 7a) beschriebenen Dinitril-Vorstufe durch $LiAlH_4$-Reduktion in wasserfreiem Dioxan zugänglich.

Beispiel 8

35,5 g ε-Caprolactam, 5,22 g ε-Amino-capronsäure, 8,26 g 1,1-Bis-[4-(aminomethylphenoxy)-phenyl]-3,3,5-trimethylcyclohexan (7c) und 2,31 g Adipinsäure werden 1 Stunde auf 200 °C und 6 Stunden auf 270 °C erhitzt (unter $N_2$, leicht gerührt). Das gebildete Polyamid hat eine relative Viskosität von 3,1 (1 %, m-Kresol, 25 °C) und eine Glasübergangstemperatur von 62 °C.

Beispiel 9

Beispiel 8 wird mit 8,13 g 1,1-Bis-[4-(aminomethylphenoxy)-phenyl]-acrylohexan (6c) anstelle des Diamin (7c) wiederholt. Es wird ein Polyamid mit einer relativen Viskosität von 3,5 und einer Glastemperatur von 61 °C erhalten.

**Ansprüche**

1. Teilkristalline oder amorphe, gegebenenfalls übliche Zusatzstoffe enthaltende Copolyamide mit erhöhter Glastemperatur, dadurch gekennzeichnet, daß sie im Copolyamid
1) 3-30 Gew.-%, Polyamideinheiten aus
1a) einer Dicarbonsäure bzw. einem Diamin der Formel

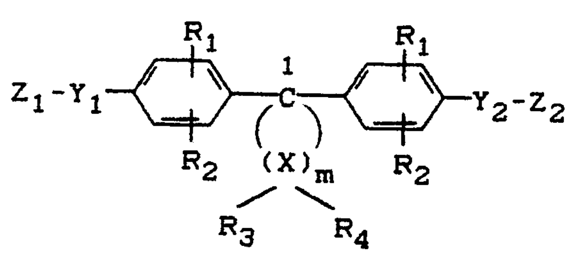

(I)

worin

$Y_1$ und $Y_2$ unabhängig voneinander für Sauerstoff- oder Schwefelstoffatome, bevorzugt jedoch Sauerstoffatome,

$Z_1$ und $Z_2$ unabhängig voneinander für o-, m-oder p-Carboxyphenyl, aliphatische Carbonsäurereste bzw. o-, m- oder p-Benzylamin, vorzugsweise jedoch für 4-Carboxyphenyl,

$R_1$ und $R_2$ unabhängig voneinander für Wasserstoff, Halogen (bevorzugt Chlor oder Brom), $C_1$-$C_8$-Alkyl, $C_5$-$C_6$-Cycloalkyl, $C_6$-$C_{10}$-Aryl und $C_7$-$C_{12}$-Aralkyl, bevorzugt Phenyl-$C_1$-$C_4$-alkyl, insbesondere Benzyl,

m für eine ganze Zahl von 4 bis 7, bevorzugt 4 oder 5,

$R_3$ und $R_4$ für jedes X individuell wählbar, unabhängig voneinander Wasserstoff ein $C_1$-$C_{12}$-Alkyl oder $C_1$-$C_{12}$-Isoalkyl,

und

X für Kohlenstoff steht,

und

1b) einem Diamin bzw. einer Dicarbonsäure,

enthalten und

2) die restlichen Polyamideinheiten des Basispolyamids aus üblichen Polyamiden auf Basis Lactamen, Aminocarbonsäuren, und/oder Diaminen/Dicarbonsäuren bestehen

und das Copolyamid eine gegenüber dem Basispolyamid um wenigstens 5 °C erhöhte Glasübergangstemperatur aufweist.

2. Copolyamide gemäß Anspruch 1, dadurch gekennzeichnet, daß 5 bis 20 Gew.-% Polyamideinheiten aus I1a) bzw. I1b) im Copolyamid enthalten sind.

3. Copolyamide gemäß Ansprüchen 1 und 2, dadurch gekennzeichnet, daß die Copolyamideinheiten 1 so aufgebaut sind, daß die Reste $R_1$ und $R_2$ Wasserstoff und die Reste $R_3$ und $R_4$ Wasserstoff oder Methyl sind, wobei mindestens einer der Reste $R_3$ oder $R_4$ Methyl sein muß.

4. Copolyamide gemäß Ansprüchen 1 bis 3, dadurch gekennzeichnet, daß die Copolyamideinheiten I so aufgebaut sind, daß zumindest an einem Kohlenstoffatom X die Reste $R_3$ und $R_4$ gleichzeitig Alkyl sind.

5. Copolyamide gemäß Ansprüchen 1 bis 2, dadurch gekennzeichnet, daß sie den Formel (Ia) bis (Ie) entsprechen.

6. Copolyamide gemäß Ansprüchen 1 bis 5, dadurch gekennzeichnet, daß die Dicarbonsäure 1,1-Bis-[4-(carboxyphenoxy)-phenyl]-cyclohexan oder 1,1-Bis-[4-(carboxyphenoxy)-phenyl]-3,3,5-trimethylcyclohexan ist.

7. Copolyamide gemäß Ansprüchen 1-6, dadurch gekennzeichnet, daß das Diamin 1,1-Bis-[4-(aminomethylphenoxy)-phenyl-]-cyclohexan oder 1,1-Bis-[4-(aminomethylphenoxy)-phenyl-]-3,3,5-trimethylcyclohexan ist.

8. Copolyamide gemäß Ansprüchen 1 bis 7, dadurch gekennzeichnet, daß sie 10-60 Gew.-% Glasfasern enthalten.